(19) Europäisches Patentamt

European Patent Office

Office européen des brevets

(11) EP 1 624 397 A1

(12) EUROPEAN PATENT APPLICATION

(43) Date of publication:
08.02.2006 Bulletin 2006/06

(51) Int Cl.:
*G06F 17/50* (2006.01)   *H04L 12/24* (2006.01)

(21) Application number: 05107080.3

(22) Date of filing: 01.08.2005

(84) Designated Contracting States:
AT BE BG CH CY CZ DE DK EE ES FI FR GB GR
HU IE IS IT LI LT LU LV MC NL PL PT RO SE SI
SK TR
Designated Extension States:
AL BA HR MK YU

(30) Priority: 02.08.2004 US 598568 P
02.12.2004 US 3998

(71) Applicant: MICROSOFT CORPORATION
Redmond, Washington 98052-6399 (US)

(72) Inventors:
• Guimbellot, David E.
Redmond, WA 98052 (US)
• Papaefstathiou, Efstathios
Redmond, WA 98052 (US)
• Hardwick, Jonathan C.
Redmond, WA 98052 (US)

(74) Representative: Zimmer, Franz-Josef
Grünecker, Kinkeldey,
Stockmair & Schwanhäusser
Anwaltssozietät
Maximilianstrasse 58
80538 München (DE)

(54) **Automatic validation and calibration of transaction-based performance models**

(57) The described systems, methods, and data structures are directed at automatic configuration of transaction-based performance models. Models of an infrastructure are created and automatically configured using data provided by existing management tools that are designed to monitor the infrastructure. These automatically configured models may be used to simulate the performance of the infrastructure in the current configuration or other potential configurations. The models may also be automatically validated calibrated by comparing results from simulations and measured data.

FIG. 1

EP 1 624 397 A1

**Description**

CROSS-REFERENCE TO RELATED APPLICATION(S)

This application claims the benefit of U. S. Provisional Application No. 60/598,568, filed August 2, 2004, titled "SYSTEM AND METHOD FOR PROCESSING PERFORMANCE MODELS TO REFLECT ACTUAL COMPUTER SYSTEM DEPLOYMENT SCENARIOS", the content of which is hereby incorporated by reference.

This application is related to U. S. Patent Application, No. 09/632,521, titled "A PERFORMANCE TECHNOLOGY INFRASTRUCTURE FOR MODELING THE PERFORMANCE OF COMPUTER SYSTEMS", the content of which is hereby incorporated by reference.

This application is related to U. S. Patent Application, No. 10/053,733, titled "LATE BINDING OF RESOURCE ALLOCATION IN A PERFORMANCE SIMULATION INFRASTRUCTURE", the content of which is hereby incorporated by reference.

This application is related to U. S. Patent Application, No. 10/053,731, titled "EVALUATING HARWARE MODELS HAVING RESOURCE CONTENTION", the content of which is hereby incorporated by reference.

This application is related to U. S. Patent Application, No. 10/304,601, titled "ACTION BASED SERVICES IN A PERFORMANCE SIMULATION INFRASTRUCTURE", the content of which is hereby incorporated by reference.

BACKGROUND

Computer system infrastructure has become one of the most important assets for many businesses. This is especially true for businesses that rely heavily on network-based services. To ensure smooth and reliable operations, substantial amount of resources are invested to acquire and maintain the computer system infrastructure. Typically, each sub-system of the computer system infrastructure is monitored by a specialized component for that sub-system, such as a performance counter. The data generated by the specialized component may be analyzed by an administrator with expertise in that sub-system to ensure that the sub-system is running smoothly.

A successful business often has to improve and expand its capabilities to keep up with customers' demands. Ideally, the computer system infrastructure of such a business must be able to constantly adapt to this changing business environment. In reality, it takes a great deal of work and expertise to be able to analyze and assess the performance of an existing infrastructure. For example, if a business expects an increase of certain types of transactions, performance planning is often necessary to determine how to extend the performance of the existing infrastructure to manage this increase.

One way to execute performance planning is to consult an analyst. Although workload data may be available for each sub-system, substantial knowledge of each system and a great deal of work are required for the analyst to be able to predict which components would need to be added or reconfigured to increase the performance of the existing infrastructure. Because of the considerable requirement for expertise and effort, hiring an analyst to carry out performance planning is typically an expensive proposition.

Another way to execute performance planning is to use an available analytical tool to predict the requirements for the workload increase. However, many of the conventional tools available today are programs that simply extrapolate from historical data and are not very accurate or flexible. Also, subjective decisions will still have to be made to choose the components that will deliver the predicted requirements.

A user-friendly tool that is capable of accurately carrying out performance planning continues to elude those skilled in the art.

DESCRIPTION OF THE DRAWINGS

These and other features and advantages of the present invention will be better understood from the following detailed description read in light of the accompanying drawings, wherein:

FIG. 1 shows an example system for automatically configuring a transaction-based performance model.

FIG. 2 shows example components of the automated modeling module illustrated in FIG. 1.

FIG. 3 shows an example process for simulating the performance of an infrastructure.

FIG. 4 shows an example process for automatically configuring a model of an infrastructure.

FIG. 5 shows an example process for simulating an infrastructure using an automatically configured model.

FIG. 6 shows an exemplary computer device for implementing the described systems and methods.

FIG. 7 shows an example process for simulating the performance of an infrastructure using a validated model.

FIG. 8 shows an example process for validating a model of an infrastructure.

FIG. 9 shows an example process for calibrating a device model using data provided by an application specific counter.

FIG. 10 shows an example process for calibrating a device model using data provided by repeated simulations with different workload levels.

DETAILED DESCRIPTION

The systems, methods, and data structure described herein relates to automatic configuration of transaction-based performance models. Models of an infrastructure are created and automatically configured using data provided by existing management tools that are designed to monitor the infrastructure. These automatically configured models may be used to simulate the performance of the infrastructure in the current configuration or other potential configurations.

The automated performance model configuration system described below enables performance modeling to be efficiently and accurately executed. This system allows users to quickly and cost-effectively perform various types of analysis. For example, the described system may be used to execute a performance analysis for a current infrastructure, which includes both hardware and software components. The system may import data from the various configuration databases to represent the latest or a past deployment of the information technology (IT) infrastructure. This model configuration may serve as the baseline for analyzing the performance of the system. The types of analysis may include capacity planning, bottleneck analysis, or the like. Capacity planning includes the process of predicting the future usage requirements of a system and ensuring that the system has sufficient capacity to meet those requirements. Bottleneck analysis includes the process of analyzing an existing system to determine which components in the system are operating closest to maximum capacity. These are typically the components that will need to be replaced first if the capacity of the overall system is to be increased.

The described system may also be used for executing a what-if analysis. Using the baseline models, a user may predict the performance of the infrastructure with one or more changes to the configurations. Examples of what-if scenarios include an increase in workload, changes to hardware and/or software configuration parameters, or the like.

The described system may further be used for automated capacity reporting. For example, a user may define a specific time interval for the system to produce automatic capacity planning reports. When this time interval elapses, the system imports data for the last reporting period and automatically configures the models. The system then uses the configured models to execute a simulation and produces reports for the future capacity of the system. The system may raise an alarm if the capacity of the system will not be sufficient for the next reporting period.

The described system may be used for operational troubleshooting. For example, an IT administrator may be notified by an operational management application that a performance threshold has been exceeded. The administrator may use the described system to represent the current configuration of the system. The administrator may then execute a simulation to identify whether the performance alarm is the cause of a capacity issue. Particularly, the administrator may determine whether the performance alarm is caused by an inherent capacity limitation of the system or by other factors, such as an additional application being run on the system by other users.

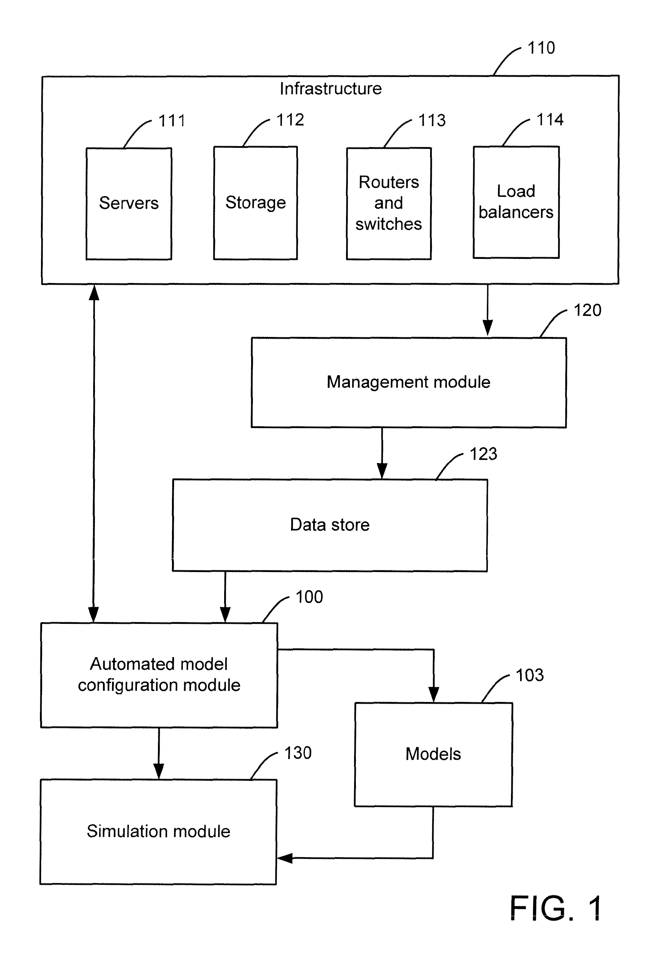

FIG. 1 shows an example system for automatically configuring a transaction-based performance model. In one implementation, the example system may include automated model configuration module 100 and simulation module 130, which are described as separate modules in FIG. 1 for illustrative purposes. In actual implementation, automated model configuration module 100 and simulation module 130 may be combined into a single component. The example system is configured to model infrastructure 110 and to emulate events and transactions for simulating the performance of infrastructure 110 in various configurations.

Infrastructure 110 is a system of devices connected by one or more networks. Infrastructure 110 may be used by a business entity to provide network-based services to employees, customers, vendors, partners, or the like. As shown in FIG. 1, infrastructure 110 may include various types of devices, such as servers 111, storage 112, routers and switches 113, load balancers 114, or the like. Each of the devices 111-114 may also include one or more logical components, such as applications, operating system, or other types of software.

Management module 120 is configured to manage infrastructure 110. Management module may include any hardware or software component that gathers and processes data associated with infrastructure 110, such as change and configuration management (CCM) applications or operations management (OM) applications. For example, management module 120 may include server management tools developed by MICROSOFT®, such as MICROSOFT® Operation Manager (MOM), System Management Server (SMS), System Center suite of products, or the like. Typically, the data provided by management module is used for managing and monitoring infrastructure 110. For example, a system administrator may use the data provided by management module 120 to maintain system performance on a regular basis. In this example, the data provided by management module is also used to automatically create models for simulation.

Management module 120 is configured to provide various kinds of data associated with infrastructure 110. For example, management module 120 may be configured to provide constant inputs, such as a list of application components from the logical topology of infrastructure 110, transaction workflows, a list of parameter names from the user workload, action costs, or the like. Management module 120 may be configured to provide configurable inputs, such as the physical topology of infrastructure 110, logical mapping of application components onto physical hardware from the logical topology, values of parameters from the user workload, or the like.

Management module 120 may also include discovery applications, which are written specifically to return information about the configuration of a particular distributed server application. For example, discovery applications may include WinRoute for MICROSOFT® Exchange Server, WMI event consumers for MICROSOFT® WINDOWS® Server, or the like. These discovery applications may be considered as specialized versions of CCM/OM for a particular application. However, these applications are typically run on demand, rather than as a CCM/OM service. Discovery applications may be used to obtain the physical topology, logical mapping, and parameter values needed to configure a performance model in a similar way to that described for CCM/OM databases. The CCM/OM databases may be used with a translation step customized for each discovery application. The data may be returned directly, rather than being extracted from a database. However, this method may involve extra delay while the discovery application is executed.

Data store 123 is configured to store data provided by management module 120. The data may be organized in any kind of data structure, such as one or more operational databases, data warehouse, or the like. Data store 123 may include data related to the physical and logical topology of infrastructure 110. Data store 123 may also include data related to workload, transactional workflow, or action costs. Such data may be embodied in the form of traces produced by event tracing techniques, such as Event Tracing for WINDOWS® (ETW) or Microsoft SQL Traces.

Automated model configuration module 100 is configured to obtain information about infrastructure 110 and to automatically create and configure models 103 of each components of infrastructure 110 for simulation. Models 103 are served as inputs to simulation module 130.

Automated model configuration module 100 may interact with infrastructure 110 and perform network discovery to retrieve the data for constructing the models. However, automated model configuration module 100 is typically configured to obtain the data from operational databases and data warehouse that store information gathered by administrative components for infrastructure 110. For example, automated model configuration module 100 may retrieve the data from data store 123, which contains data provided by management module 120.

Automated model configuration module 100 may provide any type of models for inputting to simulation module 130. In one embodiment, automated model configuration generates models for infrastructure 110 relating to physical topology, logical topology, workload, transaction workflows, and action costs.

Data for modeling the physical topology of infrastructure 110 may include a list of the hardware being simulated, including the capabilities of each component, and how the components are interconnected. The level of detail is normally chosen to match the level on which performance data can easily be obtained. For example, the MICROSOFT® WINDOWS® operating system may use performance counters to express performance data. These counters are typically enumerated down to the level of CPUs, network interface cards, and disk drives. Automated model configuration module 100 may model such a system by representing the system as individual CPUs, network interface cards, and disk drives in the physical topology description. Each component type may have a matching hardware model that is used to calculate the time taken for events on that component. Thus, the CPU component type is represented by the CPU hardware model, which calculates the time taken for CPU actions, such as computation.

Automated model configuration module 100 may use a hierarchical Extensible Markup Language (XML) format to encode hardware information, representing servers as containers for the devices that the servers physically contain. A component may be described with a template, which may encode the capabilities of that component. For example, a "PIII Xeon 700MHz" template encodes the performance and capabilities of an Intel Pill Xeon CPU running at a clock speed of 700 MHz. After the components have been named and described in this hierarchical fashion, the physical topology description may also include the network links between components. The physical topology description may be expressed as a list of pairs of component names, tagged with the properties of the corresponding network. Where more than one network interface card (NIC) is present in a server, the particular NIC being used may also be specified. Below is an example code related to physical topology modeling:

```
<active_device name="WebSrv1" count="1">
    <!--Compaq DL-580-->
    <active_device name="cpu" count="4">
        <rct name="cpu" />
        <use_template name="Cpu:PIII Xeon 700 MHz" />
    </active_device>
</active_device>
```

Data modeling for the logical topology of infrastructure 110 may include a list of the software components (or services) of the application being modeled, and a description of how components are mapped onto the hardware described in the physical topology. The list of software components may be supplied as part of the application model. For example, an application model of an e-commerce web site might include one application component representing a web server, such as MICROSOFT® Internet Information Services, and another application component representing a database server, such as MICROSOFT® SQL Server. The description of each application component may include the hardware actions that the application component requires in order to run.

Logical-to-physical mapping of application components onto hardware may be expressed using a list of the servers (described in the physical topology) that run each application component, along with a description of how load balancing is performed across the servers. Note that this is not necessarily a one-to-one mapping. A single application component may be spread across multiple servers, and a single server may host several application components. Below is an example code related to logical topology modeling:

```
<service name="IIS" policy="roundrobin">
    <serverlist>
        <server name="WebSrv1" />
        <server name="WebSrv2" />
        <server name="WebSrv3" />
    </serverlist>
    <actionscheduling>
        <schedule action="Compute" policy="freerandom">
            <target device="cpu" />
        </schedule>
    </actionscheduling>



                        </service>
```

Data for modeling the workload of infrastructure 110 may include a list of name/value pairs, defining numeric parameters that affect the performance of the system being simulated. For example, the e-commerce web site described above might include parameters for the number of concurrent users, the frequency with which they perform different transactions, etc. Below is an example code related to workload modeling:

```
<pardef>

    <parameter varname="AlertsTPS" descr="Alerts transactions
    per second" type="float" value="203."/>
    <parameter varname="LogTPS" descr="Logging transactions
    per second" type="float" value="85.5"/>
</pardef>
```

In one implementation, automated model configuration module 100 is configured to automatically configure the models of infrastructure 110 with existing data in data store 123 provided by management module 120. For example, automated model configuration module 100 may automatically configure the physical topology, the logical mapping of application components onto physical hardware from the logical topology, and the values of parameters from the workload. Typically, automated model configuration module 100 may initially create models as templates that describe the hardware or software in general terms. Automated model configuration module 100 then configures the models to reflect the specific instances of the items being modeled, such as how the hardware models are connected, how the software models are configured or used, or the like.

Simulation module 130 is configured to simulate actions performed by infrastructure 110 using models generated and configured by automated model configuration module 100. Simulation module 130 may include an event-based simulation engine that simulates the events of infrastructure 110. For example, the events may include actions of software components. The events are generated according to user load and are then executed by the underlying hardware. By calculating the time taken for each event and accounting for the dependencies between events, aspects of the performance of the hardware and software being modeled are simulated.

The system described above in conjunction with FIG. 1 may be used on any IT infrastructure. For example, a typical enterprise IT environment has multiple geo-scaled datacenters, with hundreds of servers organized in complex networks. It is often difficult for a user to manually capture the configuration of such an environment. Typically, users are required to only model a small subset of their environment. Even in this situation, the modeling process is labor-intensive. The described system makes performance modeling for event-based simulation available to a wide user base. The system automatically configures performance models by utilizing existing information that is available from enterprise management software.

By automating and simplifying configuration of models, the described system enables users to execute performance planning in a variety of contexts. For example, by enabling a user to quickly configure models to represent the current deployment, the system allows the user to create weekly or daily capacity reports, even in an environment with rapid change. Frequent capacity reporting allows an IT professional to proactively manage an infrastructure, such as anticipating and correcting performance problems before they occur.

The system described above also enables a user to easily model a larger fraction of an organization to analyze a wider range of performance factors. For example, a mail server deployment may affect multiple datacenters. If the relevant configuration data is available, models of the existing infrastructure with the mail server can be automatically configured and the models can be used to predict the latency of transactions end to end, e.g. determining the latency of sending an email from an Asia office to an American headquarters. Another example benefit of such analysis is calculating the utilization due to mail traffic of the Asian/American WAN link.

Performance analysis using the described system can also be used to troubleshoot the operations of a datacenter. For example, operations management software, such as MOM, may issue an alert about slow response times on a mail server. An IT Professional can use the system to automatically configure a model representing the current state of the system, simulate the expected performance, and determine if the problem is due to capacity issues or to some other cause.

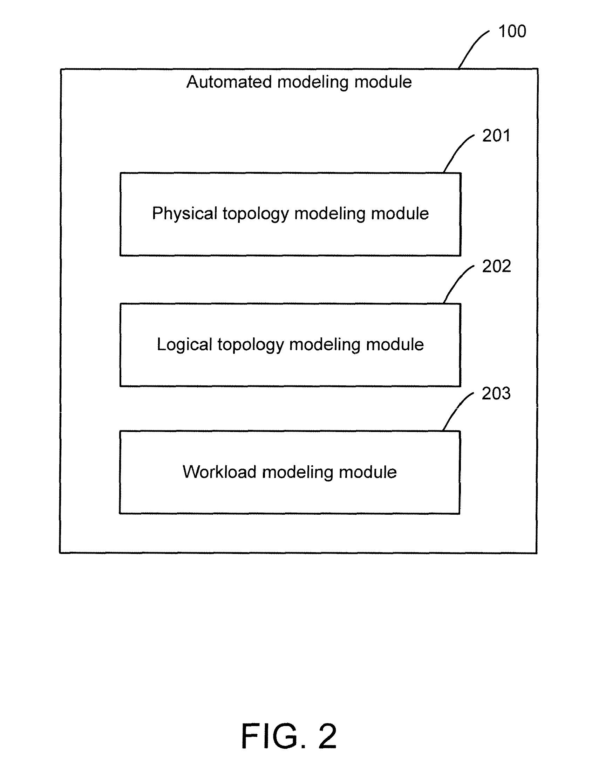

FIG. 2 shows example components of the automated modeling module 100 illustrated in FIG. 1. As shown FIG. 2, automated modeling module 100 may include physical topology modeling module 201, logical topology modeling module 202, and events analysis module 203. Modules 201-203 are shown only for illustrative purposes. In actual implementation, modules 201-203 are typically integrated into one component.

Physical topology module 201 is configured to model the physical topology of an infrastructure. The physical topology may be derived from data directly retrieved from a CCM application, an OM application, or a discovery application. For example, data may be retrieved from management module 120 in FIG. 1. Typically, the physical topology is derived using data retrieved from an operational database or data warehouse of the management module 120.

The retrieved data typically contains the information for construction a model of the infrastructure, such as a list of servers and the hardware components that they contain, and the physical topology of the network (e.g. the interconnections between servers). Physical topology module 201 may also be configured to convert the retrieved data to a format for creating models that are usable in a simulation. For example, the retrieved data may be converted to an XML format. Physical topology module 201 may also be configured to filter out extraneous information. For example, the retrieved data may contain memory size of components of the infrastructure, even through memory size is typically not directly modeled for simulation. Physical topology module 201 may further be configured to perform "semantic expansion" of the retrieved data. For example, physical topology module 201 may convert the name of a disk-drive, which may be expressed as a simple string, into an appropriate template with values for disk size, access time, rotational speed, or the like. Physical topology module 201 may be configured to convert data in various types of formats from different discovery applications.

Logical topology modeling module 202 is configured to map software components onto physical hardware models derived from data provided by management module 120. Data from both CCM applications and OM applications may be used. For example, a CCM application may record the simple presence or absence of MICROSOFT® Exchange Server, even though the Exchange Server may have one of several distinct roles in an Exchange system. By contrast, an OM application that is being used to monitor that Exchange Server may also include full configuration information, such as the role of the Exchange Server, which in turn can be used to declare the application component to which a performance model of Exchange corresponds. Logical topology modeling module 202 may be configured to convert data of the underlying format to a format that is usable for simulation models and to filter out unneeded information, such as the presence of any application that is not being modeled.

Workload modeling module 203 is configured to derive the values of parameters from the user workload. Typically, the values are derived from data retrieved from management module 120. The retrieved data may contain current or historical information about the workload being experienced by one or more applications being monitored. Typical performance counters may include the number of concurrent users, the numbers of different transaction types being requested, or the like. A translation step may be performed to convert from the underlying format of the retrieved data into a format usable in a model for simulation and to perform mathematical conversions where necessary. For example, an OM database might record the individual number of transactions of different types that were requested over a period of an hour, whereas the model may express this same information as a total number of transactions in an hour, plus the percentage of these transactions that are of each of the different types.

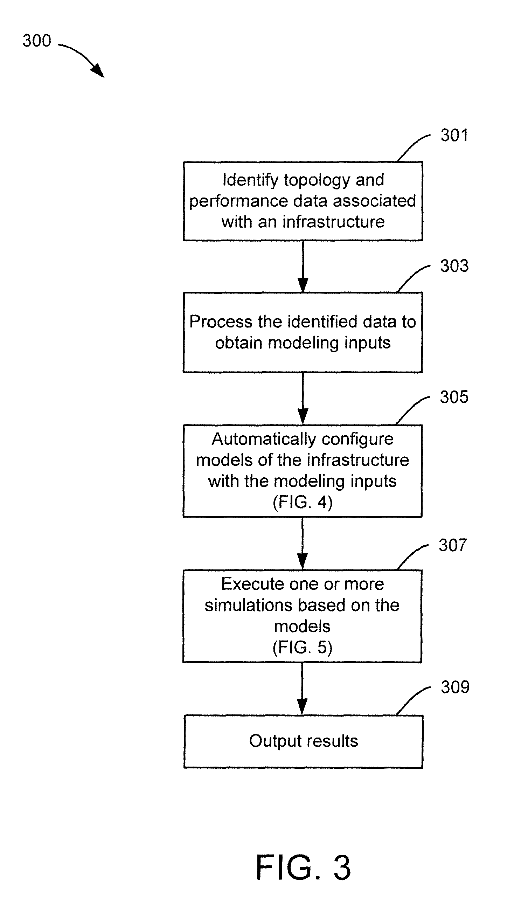

FIG. 3 shows an example process 300 for simulating the performance of an infrastructure. At block 301, topology and performance data associated with an infrastructure is identified. The identified data may be provided by one or more management applications of the infrastructure. The data may be provided directly by a management application or through an operational database or a data warehouse.

At block 303, the identified data is processed to obtain inputs for the model of the infrastructure. For example, topology data may be converted to a format that is usable by a modeling module or a simulation module, such as a XML format. Performance data may be converted to a form that is readily used to represent workload.

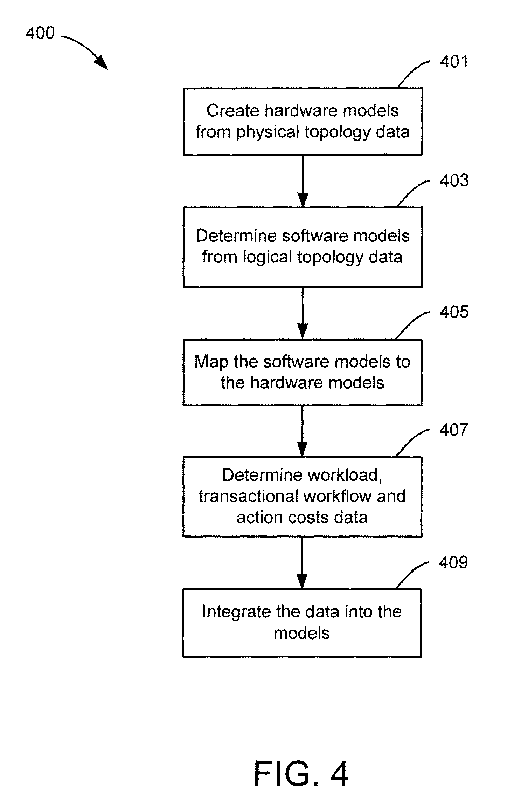

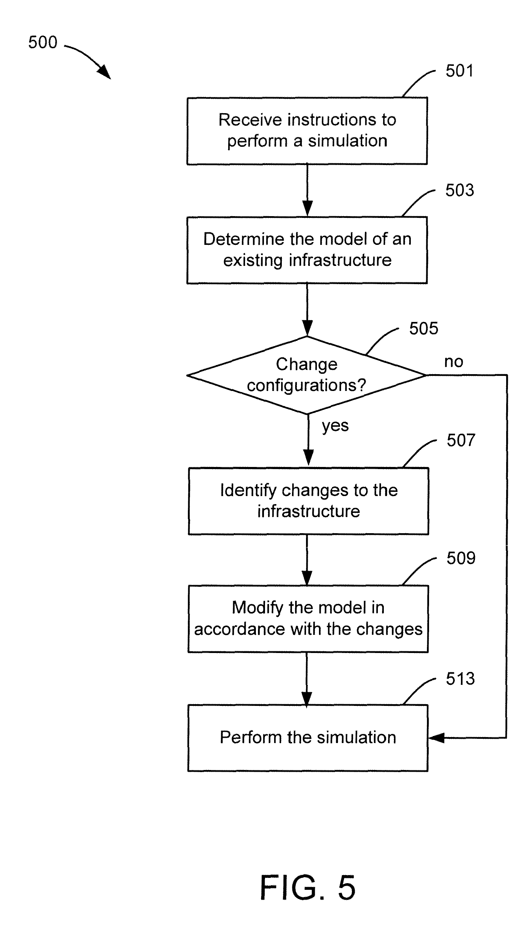

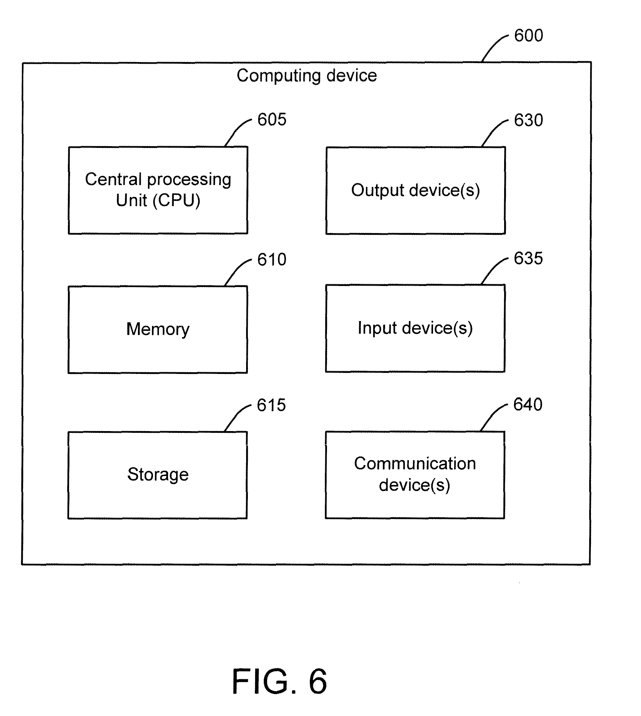

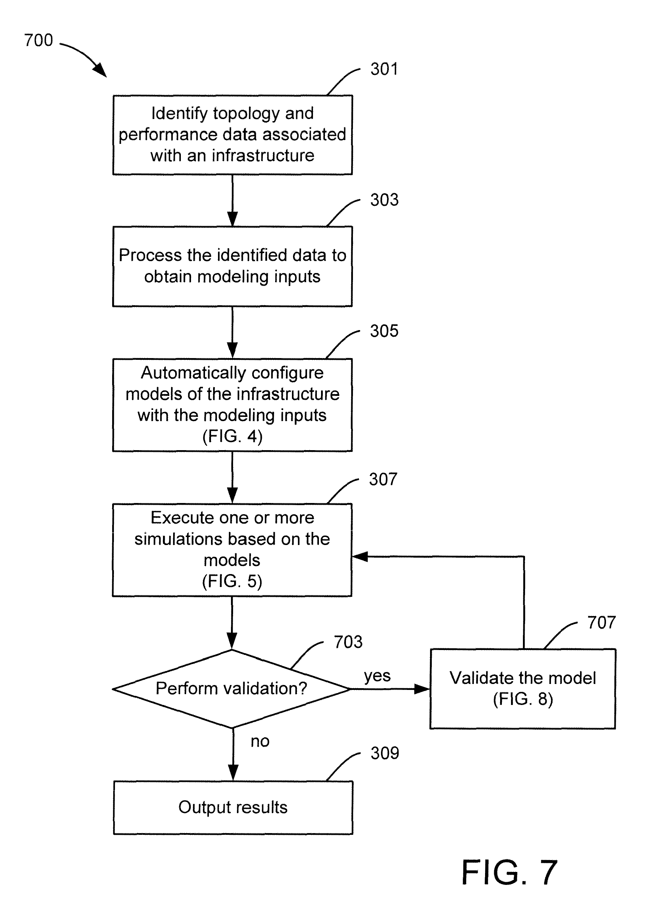

At block 305, a model of the infrastructure is automatically configured using the modeling inputs. An example process for automatically configuring a model of an infrastructure will be discussed in FIG. 4. Briefly stated, the model is configured using existing data from the management applications, such as data related to physical topology, logical topology, workload, transaction workflow, action costs, or the like.

At block 307, one or more simulations are executed based on the models. The simulations are executed based on emulating events and actions with the models of the physical and logical components of the infrastructure. Simulations may be performed on the current configuration or potential configurations of the infrastructure. An example process for simulating an infrastructure using automatically configured models will be discussed in FIG. 5. At block 309, the results of the simulation are output.

FIG. 4 shows an example process 400 for automatically configuring a model of an infrastructure. Process 400 may be implemented by the automated model configuration module 100 shown in FIG. 1 and 2. At block 401, hardware models are configured using physical topology data provided by a management application of the infrastructure. The physical topology data may include hardware configurations for devices of the infrastructure and the components of those devices. Physical topology data may also include information regarding how the devices are connected.

At block 403, software models are determined from logical topology data provided by the management application of the infrastructure. The logical topology data may include information about the software components on devices of the infrastructure and the configuration of the software components. At block 405, the software models are mapped to the hardware models.

At block 407, workload data, transactional workflow data and action costs data are determined from the management application of the infrastructure. In particular, the data may define events and actions that are performed by the hardware and software components and the time and workload associated with these events and actions. At block 409, the data are integrated into the models. For example, the software and hardware models may be configured to reflect the performance of the models when performing the defined events and actions.

FIG. 5 shows an example process 500 for simulating an infrastructure using an automatically configured model. Process 500 may be implemented by the simulation module 130 shown in FIG. 1. At block 501, instructions to perform a simulation are received. The instructions may include information related to how the simulation is to be executed. For example, the instructions may specify that the simulation is to be performed using the existing configuration of the infrastructure or a modified configuration. The instructions may specify the workload of the simulation, such as using the current workload of the infrastructure or a different workload for one or more components of the infrastructure.

At block 503, the model of an existing infrastructure is determined. Typically, the model is provided by a modeling module and is automatically configured to reflect the current state of the infrastructure. At decision block 505, a determination is made whether to change the configurations of the infrastructure model. A simulation of the infrastructure with the changed configurations may be performed to predict the performance impact before the changes are actually implemented. If there are no configuration changes, process 500 moves to block 513.

Returning to decision block 505, if the determination is made to change the configurations, process 500 moves to block 507 where changes to the infrastructure are identified. The changes may be related to any aspects of the infrastructure, such as physical topology, logical topology, or performance parameters. At block 509, the model is modified in accordance with the identified changes. At block 513, the simulation is performed using the modified model.

FIG. 6 shows an exemplary computer device 600 for implementing the described systems and methods. In its most basic configuration, computing device 600 typically includes at least one central processing unit (CPU) 605 and memory 610.

Depending on the exact configuration and type of computing device, memory 610 may be volatile (such as RAM), non-volatile (such as ROM, flash memory, etc.) or some combination of the two. Additionally, computing device 600 may also have additional features/functionality. For example, computing device 600 may include multiple CPU's. The described methods may be executed in any manner by any processing unit in computing device 600. For example, the described process may be executed by both multiple CPU's in parallel.

Computing device 600 may also include additional storage (removable and/or non-removable) including, but not limited to, magnetic or optical disks or tape. Such additional storage is illustrated in Fig. 6 by storage 615. Computer storage media includes volatile and nonvolatile, removable and non-removable media implemented in any method or technology for storage of information such as computer readable instructions, data structures, program modules or other data. Memory 610 and storage 615 are all examples of computer storage media. Computer storage media includes, but is not limited to, RAM, ROM, EEPROM, flash memory or other memory technology, CD-ROM, digital versatile disks (DVD) or other optical storage, magnetic cassettes, magnetic tape, magnetic disk storage or other magnetic storage devices, or any other medium which can be used to store the desired information and which can accessed by computing device 600. Any such computer storage media may be part of computing device 600.

Computing device 600 may also contain communications device(s) 640 that allow the device to communicate with other devices. Communications device(s) 640 is an example of communication media. Communication media typically embodies computer readable instructions, data structures, program modules or other data in a modulated data signal such as a carrier wave or other transport mechanism and includes any information delivery media. The term "modulated data signal" means a signal that has one or more of its characteristics set or changed in such a manner as to encode information in the signal. By way of example, and not limitation, communication media includes wired media such as a wired network or direct-wired connection, and wireless media such as acoustic, RF, infrared and other wireless media. The term computer-readable media as used herein includes both computer storage media and communication media. The described methods may be encoded in any computer-readable media in any form, such as data, computer-executable instructions, and the like.

Computing device 600 may also have input device(s) 635 such as keyboard, mouse, pen, voice input device, touch input device, etc. Output device(s) 630 such as a display, speakers, printer, etc. may also be included.
All these devices are well know in the art and need not be discussed at length.

As discussed above, the described systems, methods and data structures are capable of automatically configuring infrastructure models using data from available management applications. These systems, methods and data structures may be further enhanced by incorporating an automatic validation and calibration feature. A model may be validated and calibrated to a degree of accuracy selected by a user.

After a model of an infrastructure has been automatically configured, validation may be performed to confirm that the model's performance predictions are accurate to within a user-specified degree. If the specified degree of accuracy is not achieved, calibration may be performed to modify non-configurable aspects of the model to achieve the specified accuracy. The configurable aspects of a model, such as the representation of the hardware, topology, workload, or the like, are typically not changed by the calibration. The calibration may change parameters associated with the model, such as action costs, background load, or other parameters that are part of the model template.

Action costs are numeric values representing the resource requirements of a particular transaction step on a particular hardware resource. Action costs may be measured in terms that are specific to the type of hardware device being used. Typically, action costs are independent of the particular instance of the device. For example, action costs for a CPU may be measured in megacycles of computation, while action costs for a disk may be measured in terms of the number of disk transfers required and the amount of data transferred. Different CPUs and disks may take different amounts of simulated time to process actions that require the same action costs. Action costs are typically obtained during the development of an infrastructure model, by benchmarking the application to be modeled in a performance laboratory.

Ideally, all action costs for a particular device type (e.g. CPU) may be described using a single numeric value (e.g. megacycles), and may accurately scale across all instances of that device type. In practice, scaling may not be simple. For example, running the same action on a CPU with twice the clock speed may not result in half the time taken to complete the action. Accounting for all the factors that affect this nonlinear scaling is often impractical. Even if a very complex model is provided that accurately accounts for all possible factors, the model may still not be used for a variety of reasons. For example, the time and/or memory required to compute the final result may be much higher than that for a simple model, resulting in prohibitively long simulation times. Also, the number of input variables required may be too great for simple data collection and model configuration. Spending a significant amount of time or effort instrumenting applications and hardware may not be desired.

To alleviate the difficult tradeoff between model accuracy and complexity, calibration may be used to obtain the benefits of both, e.g. a simple, fast model can be used with a specified minimum of accuracy for a wide range of inputs. Validation may be implemented to determine whether the modeling accuracy is sufficient. Calibration may be implemented to adjust the action costs to better reflect the particular set of inputs being used.

Background load is another variable that is often encountered in practice, but is typical not implemented in a conventional model. Background load refers to the utilization of hardware resources by applications that are not part of the workload model. For example, a virus checker may be imposing extra CPU overhead on every disk read, in order to scan contents in the disk for virus signatures. A local area network (LAN) is another example because a LAN is very rarely dedicated to a single application. More often, a LAN is shared across multiple computers running multiple applications, each of which has its own impact on the network. Sometimes, the user may be aware of this background load and may include this load as part of the initial model configuration, for example by specifying a fixed percentage of utilization of the LAN. However, more often, the user is unaware of these extra effects, and only knows that the performance model seems inaccurate.

Additionally, some background load effects may not be constant, but rather may be dependent on the workload. The virus checker is an example. Normally, disk operations are modeled independently of the CPU. There may not be a "CPU cost" field provided in a disk model. The effect of the virus checker may be seen as an increased CPU cost for all transactions containing disk access actions.

To validate the accuracy of a performance model, the performance of the application being modeled may be captured. Performance data may be captured using statistical counters that measure performance aspects the application and the hardware devices on which the application executes. For example, "performance counters" exposed by MICROSOFT® WINDOWS® may be used. Other examples include hardware measures (e.g. the amount of CPU time used by a CPU) and counters created by an application to measure performance, such as the average transaction rate.

Models are typically developed to use performance counter measures as part of the models' configuration information. The level of abstraction of a model may be chosen to match the availability of performance information. The outputs of the models may also be expressed in terms of these performance counters. For example, the outputs may include how much CPU time is used on a particular CPU during a simulated series of transactions, and the average transaction rate that the application sustains.

As described above, during automatic configuration, information about the application being modeled may be imported from OM database. An example of such a database is that maintained by Microsoft Operation Manager (MOM), which includes historical values of performance counters for the application being modeled. These counters may capture both the input workload (e.g. the number of transactions processed) and the observed results (e.g. the CPU time consumed).

Validation may include taking the automatically configured model, setting inputs of the model to historically observed performance counter values (e.g. number of transactions per hour) from the OM database, running a performance simulation, and comparing the predicted outputs to historically observed performance counter values (e.g. the CPU time consumed). For a predicted performance counter value, the accuracy of the performance model may be expressed in both relative (i.e. percentage) and absolute (e.g. number of megacycles) terms. The required accuracy may be expressed in either of these terms. Additionally, the performance counters may be grouped. The required accuracy may be applied to the group as a whole. For example, a user may require all disk bandwidth predictions to be accurate to within 20%, or all CPU megacycle predictions on front-end web servers to be accurate to within 5%.

Performance counters may be organized into two categories based on the scope of the counters. Some counters apply to a specific application. For example, a mail server application may expose the CPU usage caused by the application. These counters may be defined as application specific counters. The operation system (OS) is also responsible for monitoring the overall performance of a system, and exposes counters, such as the overall CPU usage. These system wide counters may include usage of all the applications that execute on the system. When there is an error in the model, these counters may be used to determine the source of the error. The errors may be characterized into work load dependent errors and workload independent errors.

Workload dependent errors include errors with a magnitude that varies as a function of the application workload. For example, the workload dependent errors may result from an incorrect modeling assumption, start up effects (e.g. cold caches), application saturation (e.g. locks), missing transaction classes, or the like. Missing transaction classes is very common since, typically, just the most common transactions are modeled, rather than all supported transactions. The effect of workload dependent errors may be calculated by comparing application specific counters with modeling results. For example, if the predicted CPU utilization of the mail server application is 10% and the actual CPU usage of the application is 15%, the 5% difference is a workload dependent error.

Workload independent errors include errors with a magnitude that is independent of the workload. Workload independent errors are typically resulted from overheads from the OS or other workloads not included in a model. For example, a single server device may run both a mail server application and a file server application. A mail server application model may not account for the device usage caused by the file server application. The effect of workload independent errors may be calculated by comparing system wide counters with application specific counters. For example, if the CPU usage of the mail server application is 25%, and the overall CPU usage is 35%, the 10% difference is a workload independent error due to a constant or background load.

Default values for required accuracy limits may be supplied as part of the underlying model. For example, if the disk model has been found in practice to be particularly accurate, the default required accuracy may be set to 5%, since a value outside of this range is more likely to be the result of a hidden underlying factor, such as background load. Conversely, if the CPU model is known to be less accurate, the default required accuracy may be set to 20% to avoid inaccurate conclusions from the results.

The accuracies may be grouped to simplify the display of information and to reduce user load. For example, rather than showing the accuracies for all front-end web servers in a data center, the validation user interface may show a single representation of the front-end web servers, with a range of accuracies (e.g. "-6% to +7%"). Color-coding may further enhance the usability of the interface. For example, performance counters with an accuracy that lies well within the user-specified limits may be displayed in green, those which are approaching the limits in orange, and those which exceed the limits in red.

If a user is satisfied with the observed-vs.-predicted accuracy of all the performance counters, the validation process is complete, and the user may use the model to perform what-if analyses with greater confidence in the final results. Otherwise, one or more cycles of calibration followed by validation may be performed.

Calibration involves adjusting either the action costs or the background load of the underlying performance model to improve the accuracy of model validation. Adjusting the action costs may produce the desired effect if the underlying cause of the inaccuracy is dependent on the workload (i.e. workload dependent error). If the underlying cause is independent of the workload, for example another application is using percentage of the LAN bandwidth, then adjusting the action costs may result in inaccurate results for all levels of workload except the one chosen for validation.

Adjusting the background load may be used to improve the accuracy of model validation by including the concept of workload dependent background load. Background load can be a constant, or a scalar that is multiplied by the current workload. Background load can be applied on a per-device level, rather than on a per-action level. However, to capture the case where the model underestimates the performance of an application, background load may be extended to include a negative load (i.e. adjusting the capacity of the device so that it is higher than it should be, based on the model). Negative load may be used to account for cases where devices scale better than the results from the models.

The concept of background load may be applied to the resource capacity of the underlying hardware models being used in the simulation. The background load may be constant (i.e. workload independent errors) or workload dependent and may act as a positive or negative factor. The correct amount by which to adjust the background load depends on the underlying model. If the model is linear, a multiplication by a correction factor may be sufficient. However, more complex models may require unique calculations to determine the appropriate correction factor. As with default accuracy values, these calculations may be provided as a calibration function within the hardware model. This calibration function may be called for each device type with the observed inaccuracy. The calibration function may return the appropriate factor or constant amount by which to change the resource costs in order to bring the inaccuracy to zero.

After an inaccuracy error is observed, analysis may be performed to determine which part of the inaccuracy is due to a constant effect and which part is due to a workload dependent effect. This determination may be made by comparing the results of two simulations. The determination may also be made by comparing the results of an application-specific counter and those of a system wide performance counter.

Inaccuracy assessment by simulation involves performing two simulations using two different workload values and determining whether the inaccuracies of the two simulations stay the same or vary. Any workload variation for the second simulation may be used, such as half or twice the previous workload. Doubling the workload may result in non-linear performance effects as individual components near saturation. For example, the behavior of the overall system may become exponential, even if the behavior is normally linear. Thus, using half the workload in the second simulation may provide better results in many situations. However, half the workload in the second simulation may not be desired when the initial workload is so low that the model is approaching the level of granularity of the performance counters and the performance effects may be lost in the noise. Calibration using this solution therefore consists of:

    a) Rerunning the simulation for a second time with a different workload intensity (e.g. with half the workload)
    b) For each hardware device being modeled that requires calibration:

        i) Comparing the observed performance counters and predicted performance counters for the first and second simulations to determine whether the device should have a constant background load or a variable background load applied.

        ii) Calling the calibration function of the appropriate hardware model, supplying the constant or variable background load error, and obtaining the corresponding constant or variable background load factor.

        iii) Apply the load factor to the underlying device.

Inaccuracy assessment by simulation may be represented by:
$$e = l \cdot e_v + e_c \Rightarrow u_m - u_p = l \cdot e_v + e$$

where $l$ represents load, e represents the overall error, $e_c$ represents the constant error (e.g. due to background load), $e_v$ represents the variable error due to load, $u_p$ represents the predicted device utilization, and $u_m$ represents the measured device utilization.

In the equation above, $u_m$, $u_p$ and $l$ are known. Running the simulations with two loads results in a simple system of 2 equations with 2 unknowns. Thus, $e_v$ and $e_c$ can be readily determined.

Inaccuracy assessment by using performance counters typically requires the availability of pairs of application specific and system wide performance counters that characterize the utilization level of the same device. Calibration may be performed by:

    a) Determining the error that is due to the background load (e.g. the predicted utilization counter minus the system wide counter). The result is the constant background load to apply to the device.
    b) Determine the workload dependent error (e.g. the predicted utilization counter minus the application specific counter). The result is the background load to apply as a function of the load.
    c) Apply the combined load factors to the underlying device.

After completing a calibration step, the validation may be executed again.

FIG. 7 shows an example process 700 for simulating the performance of an infrastructure using a validated model. Process 700 is similar to process 300 shown in FIG. 3 but includes extra steps after block 307.

At decision block 703, a determination is made whether validation of the automatically configured model will be performed. If not, process 700 continues at block 309. If validation will be performed, process 700 moves to block 707 where the model is validated. An example process for validating the model will be discussed in conjunction with FIG. 8. The process then moves to block 707 where the results of the simulation are outputted.

FIG. 8 shows an example process 800 for validating a model of an infrastructure. At block 803, results from a simulation are identified. At block 805, workload data from measurements are determined. The measured workload data may be provided by a management module for an infrastructure. At block 807, the simulation results are compared with the measured workload data. An error may be calculated from the comparison. At decision block 809, a determination is made whether the error is within an acceptable level. If so, process 800 moves to block 815 where the model is validated.

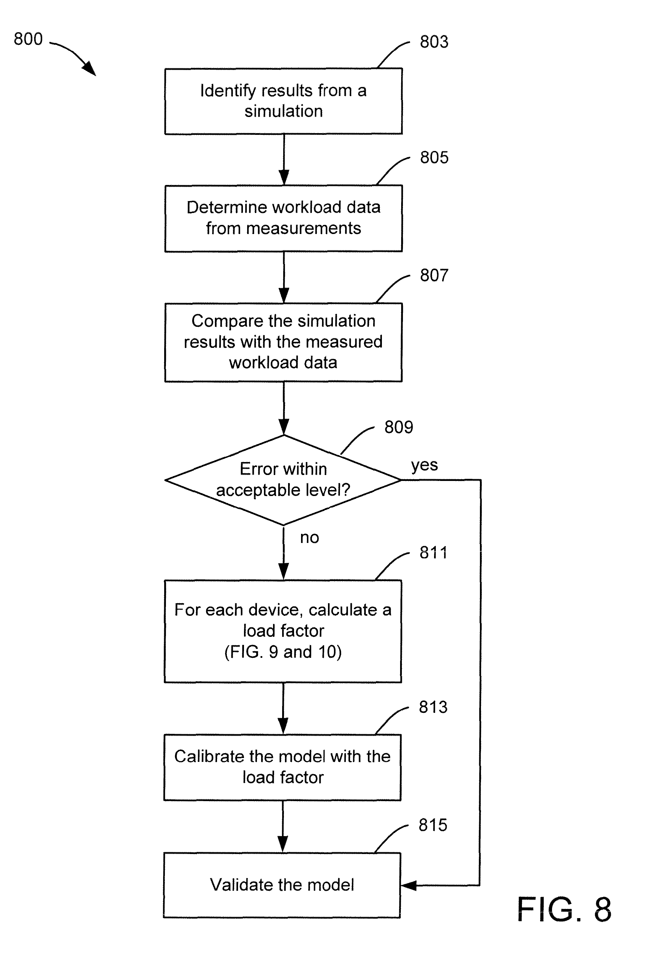

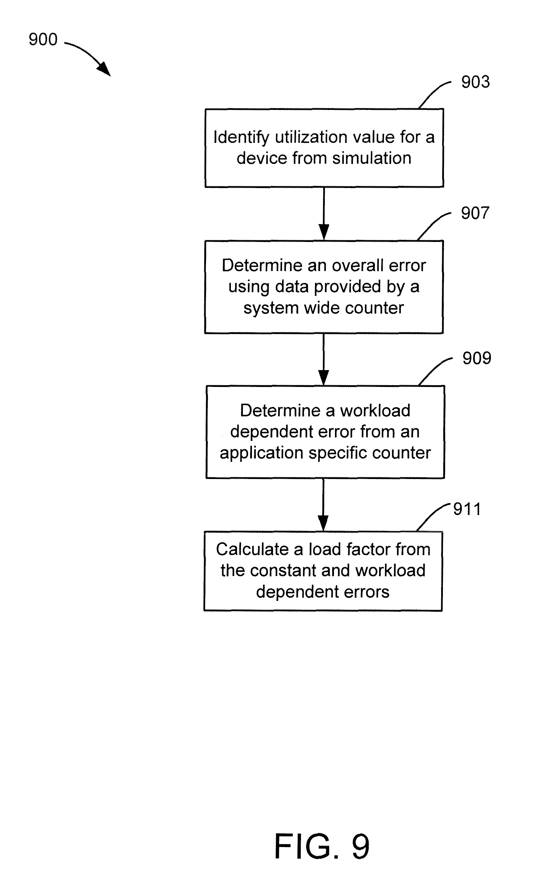

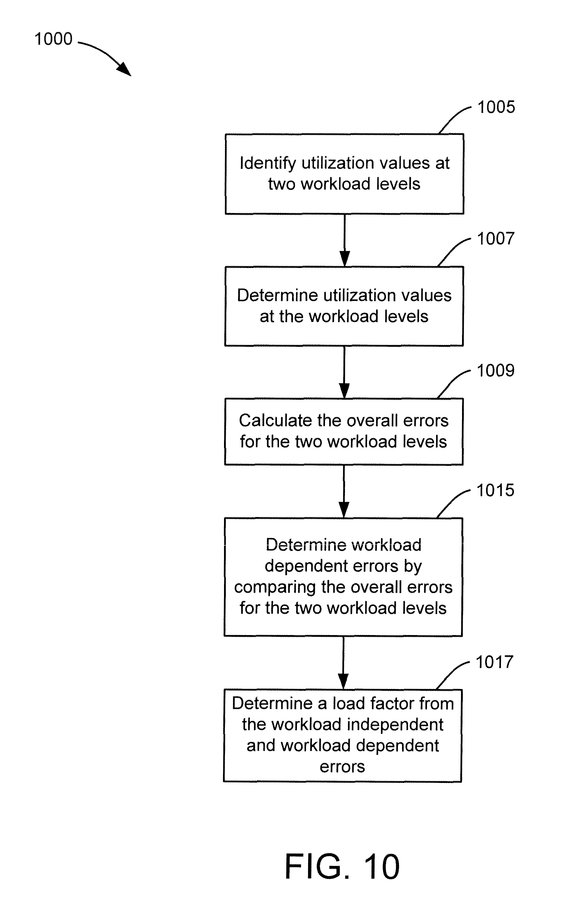

Returning to decision block 809, if the error is not within the acceptable level, process 800 moves to block 811 where a load factor for each device of the infrastructure is determined. The load factor may be determined by comparing data provided by an overall performance counter and data provided by an application specific counter. The load factor may also be determined from results generated by two simulations executed with two different workload levels. Examples of these methods will be discussed in conjunction with FIG. 9 and 10.

At block 813, the model is calibrated with the load factor. For example, the model may be configured to account for workload independent errors during simulation as a constant background load and to scale the workload dependent errors based on the workload level. At block 815, the model is validated after calibration. It is to be appreciated that the steps in block 809, 811 and 813 may be repeated until the error is within the acceptable level.

FIG. 9 shows an example process 900 for calibrating a device model using data provided by an application specific counter. At block 903, a utilization value for the device is identified from simulation. At block 907, the overall error is determined using data provided by a system wide counter. For example, the overall error may be determined by subtracting the utilization value provided by the system wide counter by the utilization value of the device from simulation. The overall error may represent a background load that includes a workload dependent component (e.g. application load that is not modeled) and a workload independent component (e.g. load generated by the OS of the device). This background load resulted in an error because the load is not accounted by the model during simulation.

At block 909, a workload dependent error is determined using data provided by an application specific counter. The application specific counter determines the utilization of the application. The workload dependent error may be determined from the differences between the simulated and the actual utilization value associated with the application. The remaining overall error is the constant error that is workload independent. At block 911, a load factor for calibration is calculated from the constant and workload dependent errors.

FIG. 10 shows an example process 1000 for calibrating a device model using data provided by repeated simulations with different workload levels. At block 1005, the measured utilization values from two workload levels are identified. At block 1007, simulated utilization values for the two workload levels are determined. At block 1009, the overall errors for the two workload levels are calculated. For example, the overall errors may be calculated by subtracting the measured data by the simulation results. The overall errors represent background load that is not accounted by the model.

At block 1015, the workload dependent error is calculated by comparing the overall errors for the two workload levels. For example, if the overall errors are different at the two workload levels, the difference represents the error that is dependent on workload. The remaining error is workload independent. At block 1017, a load factor is determined from the workload independent and workload dependent errors.

To implement validation and calibration of automatically configured models, automated modeling module 100 shown in FIG. 1 and 2 may be configured to implement processes 800, 900 and 1000 discussed above.

While the preferred embodiment of the invention has been illustrated and described, it will be appreciated that various changes can be made therein without departing from the spirit and scope of the invention.

## Claims

1. A computer-implemented method for modeling an infrastructure containing multiple devices, the infrastructure being monitored by a management application, the computer-implemented method comprising:

    generating a model of the infrastructure;
    configuring the model using information provided by the management application;
    performing a simulation with the model;
    identifying performance data from the simulation;
    calculating an error based, at least in part, on comparing the simulated performance data with measured performance data provided by the management application; and
    validating the model if the error is within a threshold value.

2. The computer-implemented method as recited in claim 1, further comprising:

    determining a simulated utilization value for a device in the infrastructure;
    determining a measured utilization value for the device from a system counter associated with the device;
    determining an overall device error by comparing the simulated utilization value and the measured utilization value; and
    calibrating the model using the overall device error.

3. The computer-implemented method as recited in claim 2, wherein calibrating the model is performed by adjusting at least one of an action cost or a background load associated with the device.

4. The computer-implemented method as recited in claim 1, further comprising:

determining a measured application utilization value from an application specific counter associated with an application executing on a device in the infrastructure;
determining a simulated application utilization value for the application;
determining a workload dependent error based, at least in part, on comparing the measured application utilization value and the simulated application utilization value; and
calibrating the model based, at least in part, on the workload dependent error.

5. The computer-implemented method as recited in claim 4, further comprising:

determining a simulated utilization value for the device;
determining a measured utilization value for the device from a system counter associated with the device;
determining an overall device error based, at least in part, on comparing the simulated utilization value and the measured utilization value;
determining a constant error from the overall device error and the workload dependent error; and
calibrating the model based, at least in part, on the constant error.

6. The computer-implemented method as recited in claim 1, further comprising:

determining a first simulated utilization value for a device in the infrastructure from the simulation;
determining a measured utilization value for the device from a system counter associated with the device; and
determining an first device error by comparing the first simulated utilization value and the measured utilization value.

7. The computer-implemented method as recited in claim 6, further comprising:

performing a second simulation with the model;
determining a second simulated utilization value for the device from the second simulation;
determining a second device error by comparing the second simulated utilization value and the measured utilization value.

8. The computer-implemented method as recited in claim 6, further comprising:

determining a workload independent error and a workload dependent error associated with the device by comparing the first device error and the second device error; and
calibrating the model based, at least in part, on the workload independent error and the workload dependent error.

9. The computer-implemented method as recited in claim 8, wherein the workload independent error is determined based, at least in part, on the difference between the first device error and the second device error.

10. The computer-implemented method as recited in claim 8, wherein calibrating the model is performed by adjusting at least one of an action cost or a background load associated with the device.

11. One or more computer-readable media encoded with computer-executable instructions for performing the computer-implemented method recited in claim 1.

12. An apparatus configured to perform the computer-implemented method as recited in claim 1.

13. A computer-implemented method for automatically calibrating a model of an infrastructure, the computer-implemented method comprising:

performing a simulation with the infrastructure model;
identifying a device model included in the infrastructure model, the device model associated with a device in the infrastructure;
determining from the simulation a first utilization level for an application executing on the device;
determining from measurement a second utilization level for the application;
determining a workload dependent error by comparing the first utilization level and the second utilization level; and
calibrating the device model based, at least in part, on the workload dependent error.

**14.** The computer-implemented method as recited in claim 13, wherein calibrating the device model based, at least in part, on the workload dependent error includes correcting the device model with a factor that scales with workload.

**15.** The computer-implemented method as recited in claim 13, wherein the second utilization level is determined from an application specific counter associated with the application.

**16.** The computer-implemented method as recited in claim 13, further comprising:

determining from the simulation a third utilization level for the device;
determining from measurement a fourth utilization level for the device;
determining a device error by comparing the third utilization level and the fourth utilization level;
determining a constant error from the device error and the workload dependent error; and
calibrating the device model based, at least in part, on the constant error.

**17.** The computer-implemented method as recited in claim 16, wherein calibrating the device model based, at least in part, on the constant error includes correcting the device model with a constant factor that does not change with workload.

**18.** The computer-implemented method as recited in claim 16, further comprising:

validating each device model in the infrastructure; and
performing the identifying, determining and calibrating steps for each device that is not validated.

**19.** One or more computer-readable media encoded with computer-executable instructions for performing the computer-implemented method recited in claim 13.

**20.** An apparatus configured to perform the computer-implemented method as recited in claim 13.

**21.** A computer-implemented method for automatically calibrating a model of an infrastructure, the computer-implemented method comprising:

performing a first simulation having a first workload;
performing a second simulation having a second workload different from the first workload;
determining from the first simulation a first simulated utilization level for a device represented as a device model in the infrastructure model;
determining from the second simulation a second simulated utilization level for the device;
determining from measurement a first actual utilization level for the device, the first actual utilization level associated with the first workload;
determining from measurement a second actual utilization level for the device, the second actual utilization level associated with the second workload;
calculating a first error associated with the first simulation, the first error representing a difference between the first simulated utilization level and the first actual utilization level;
calculating a second error associated with the second simulation, the second error representing a difference between the second simulated utilization level and the second actual utilization level; and
calculating a workload dependent error representing the difference between the first error and the second error; and
calibrating the device model with the workload dependent error.

**22.** The computer-implemented method as recited in claim 21, further comprising:

determining a workload independent error representing a common component of the first error and the second error; and
calibrating the device model with the workload independent error.

**23.** The computer-implemented method as recited in claim 21, further comprising:

validating each device model in the infrastructure; and
performing the determining, calculating and calibrating steps for each device that is not validated.

**24.** One or more computer-readable media encoded with computer-executable instructions for performing the computer-implemented method recited in claim 21.

**25.** An apparatus configured to perform the computer-implemented method as recited in claim 21.

**26.** A system comprising:

means for performing a simulation with a model of an infrastructure;
means for identifying a device model representing in the infrastructure model;
means for determining a simulated device utilization level of the device;
means for determining an actual device utilization level of the device; and
means for calculating a device error based, at least in part, on comparing the simulated device utilization level and the actual device utilization level; and
means for validating the device model based, at least in part, on the device error.

**27.** The system as recited in claim 26, further comprising:

means for determining a simulated application utilization level of the device;
means for determining an actual application utilization level of the device;
means for determining a workload dependent factor based, at least in part, on comparing the simulated application utilization level and the actual application utilization level; and
means for calibrating the device using the a workload dependent factor.

**28.** The system as recited in claim 27, further comprising:

means for calculating a workload independent factor based, at least in part, on the device error and the workload dependent factor; and
means for calibrating the device using the a workload independent factor.

**29.** The system as recited in claim 27, further comprising:

means for performing another simulation with a different workload;
means for calculating another device error for the other simulation;
means for determining a workload dependent factor based, at least in part, on comparing the two device errors; and
means for calibrating the device using the a workload dependent factor.

**30.** The system as recited in claim 29, further comprising:

means for calculating a workload independent factor based, at least in part, on comparing the two device errors; and
means for calibrating the device using the a workload independent factor.

**31.** A system comprising:

means for performing a simulation based, at least in part, on a model of the infrastructure;
means for automatically gathering data from performance counters associated with an infrastructure; and
means for automatically validating the model by comparing results from the simulation and the gathered data.

**32.** The system as recited in claim 31, further comprising:

means for calculating errors between results from the simulation and the gathered data; and
means for automatically calibrating the model based, at least in part, on the errors.

FIG. 1

100

Automated modeling module

201

Physical topology modeling module

202

Logical topology modeling module

203

Workload modeling module

# FIG. 2

300

301

Identify topology and
performance data associated
with an infrastructure

303

Process the identified data to
obtain modeling inputs

305

Automatically configure
models of the infrastructure
with the modeling inputs
(FIG. 4)

307

Execute one or more
simulations based on the
models
(FIG. 5)

309

Output results

# FIG. 3

400

```
                                        ┌─────────────────────┐ ⌐ 401
                                        │  Create hardware models │
                                        │ from physical topology data │
                                        └─────────────────────┘
                                                  │
                                                  ▼
                                        ┌─────────────────────┐ ⌐ 403
                                        │ Determine software models │
                                        │  from logical topology data │
                                        └─────────────────────┘
                                                  │
                                                  ▼
                                        ┌─────────────────────┐ ⌐ 405
                                        │  Map the software models to │
                                        │    the hardware models  │
                                        └─────────────────────┘
                                                  │
                                                  ▼
                                        ┌─────────────────────┐ ⌐ 407
                                        │   Determine workload,   │
                                        │ transactional workflow and │
                                        │    action costs data    │
                                        └─────────────────────┘
                                                  │
                                                  ▼
                                        ┌─────────────────────┐ ⌐ 409
                                        │  Integrate the data into the │
                                        │         models          │
                                        └─────────────────────┘
```

# FIG. 4

500

501

Receive instructions to
perform a simulation

503

Determine the model of an
existing infrastructure

505

Change
configurations?

no

yes

507

Identify changes to the
infrastructure

509

Modify the model in
accordance with the changes

513

Perform the simulation

FIG. 5

**FIG. 6**

700

301

Identify topology and performance data associated with an infrastructure

303

Process the identified data to obtain modeling inputs

305

Automatically configure models of the infrastructure with the modeling inputs (FIG. 4)

307

Execute one or more simulations based on the models (FIG. 5)

703

Perform validation?

yes → 707

Validate the model (FIG. 8)

no

309

Output results

FIG. 7

800

803
Identify results from a
simulation

805
Determine workload data
from measurements

807
Compare the simulation
results with the measured
workload data

809
Error within
acceptable level?    yes

no

811
For each device, calculate a
load factor
(FIG. 9 and 10)

813
Calibrate the model with the
load factor

815
Validate the model

FIG. 8

900

903

Identify utilization value for a
device from simulation

907

Determine an overall error
using data provided by a
system wide counter

909

Determine a workload
dependent error from an
application specific counter

911

Calculate a load factor from
the constant and workload
dependent errors

# FIG. 9

1000

1005

Identify utilization values at
two workload levels

1007

Determine utilization values
at the workload levels

1009

Calculate the overall errors
for the two workload levels

1015

Determine workload
dependent errors by
comparing the overall errors
for the two workload levels

1017

Determine a load factor from
the workload independent
and workload dependent
errors

# FIG. 10

## European Patent Office

# EUROPEAN SEARCH REPORT

Application Number

EP 05 10 7080

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | DEMPSEY S ET AL: "Predicting FDDI Computer Network Performance Using A Calibrated Software Simulation Model" PERFORMANCE, COMPUTING, AND COMMUNICATIONS CONFERENCE, 1997. IPCCC 1997., IEEE INTERNATIONAL PHOENIX, TEMPE, AZ, USA 5-7 FEB. 1997, NEW YORK, NY, USA,IEEE, US, 5 February 1997 (1997-02-05), pages 1-9, XP010217039 ISBN: 0-7803-3873-1 * the whole document * | 1-32 | G06F17/50 G06F17/60 H04L12/24 |
| X | US 2003/139918 A1 (HARDWICK JONATHAN CHRISTOPHER ET AL) 24 July 2003 (2003-07-24) * paragraphs [0002], [0007] * * paragraphs [0027] - [0029], [0032] - [0035] * * paragraphs [0037], [0044], [0048] * | 1-32 | |
| A | WO 03/039070 A (BRITISH TELECOMMUNICATIONS PUBLIC LIMITED COMPANY; SAFFRE, FABRICE, TR) 8 May 2003 (2003-05-08) * pages 5,6; figures 6,9-12 * | 1-32 | TECHNICAL FIELDS SEARCHED (Int.Cl.7) G06F H04L |
| A | US 5 809 282 A (COOPER ET AL) 15 September 1998 (1998-09-15) * abstract * * column 5, line 54 - column 6, line 65 * * column 9, line 38 - column 11, line 45 * | 1-32 | |
| A | US 2003/061017 A1 (DOTARO EMMANUEL ET AL) 27 March 2003 (2003-03-27) * abstract * * paragraphs [0022] - [0062] * | 1-32 | |

-/--

The present search report has been drawn up for all claims

| Place of search | Date of completion of the search | Examiner |
|---|---|---|
| Munich | 7 September 2005 | Breidenich, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

........................................................................

& : member of the same patent family, corresponding document

EPO FORM 1503 03.82 (P04C01)

**European Patent Office**

**EUROPEAN SEARCH REPORT**

Application Number

EP 05 10 7080

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | EP 0 910 194 A (AT&T WIRELESS SERVICES, INC) 21 April 1999 (1999-04-21)<br>* abstract *<br>* paragraphs [0022] - [0025] *<br>----- | 1-32 | |
| | | | **TECHNICAL FIELDS SEARCHED** (Int.Cl.7) |

The present search report has been drawn up for all claims

| Place of search | Date of completion of the search | Examiner |
|---|---|---|
| Munich | 7 September 2005 | Breidenich, M |

CATEGORY OF CITED DOCUMENTS

X : particularly relevant if taken alone
Y : particularly relevant if combined with another
  document of the same category
A : technological background
O : non-written disclosure
P : intermediate document

T : theory or principle underlying the invention
E : earlier patent document, but published on, or
  after the filing date
D : document cited in the application
L : document cited for other reasons

& : member of the same patent family, corresponding
  document

EPO FORM 1503 03.82 (P04C01)

## ANNEX TO THE EUROPEAN SEARCH REPORT
## ON EUROPEAN PATENT APPLICATION NO.

EP 05 10 7080

This annex lists the patent family members relating to the patent documents cited in the above-mentioned European search report.
The members are as contained in the European Patent Office EDP file on
The European Patent Office is in no way liable for these particulars which are merely given for the purpose of information.

07-09-2005

| Patent document cited in search report | | Publication date | Patent family member(s) | | Publication date |
|---|---|---|---|---|---|
| US 2003139918 | A1 | 24-07-2003 | NONE | | |
| WO 03039070 | A | 08-05-2003 | WO | 03039070 A2 | 08-05-2003 |
| US 5809282 | A | 15-09-1998 | AU | 6269396 A | 30-12-1996 |
| | | | WO | 9641451 A1 | 19-12-1996 |
| | | | US | 5934215 A | 10-08-1999 |
| US 2003061017 | A1 | 27-03-2003 | FR | 2830094 A1 | 28-03-2003 |
| | | | EP | 1300985 A2 | 09-04-2003 |
| EP 0910194 | A | 21-04-1999 | CA | 2247753 A1 | 24-03-1999 |
| | | | EP | 0910194 A2 | 21-04-1999 |
| | | | JP | 11163916 A | 18-06-1999 |

EPO FORM P0459

For more details about this annex : see Official Journal of the European Patent Office, No. 12/82